# EUROPÄISCHE PATENTANMELDUNG

(11) **EP 2 767 600 A1**
(43) Veröffentlichungstag der Anmeldung: **20.08.2014**
(21) Anmeldenummer: 13155498.2
(22) Anmeldetag: 15.02.2013
(51) Int. Cl.: C21D 8/02, C21D 9/00, B22D 11/12, B21B 1/46, F27B 9/38, C21D 1/42

(54) **Verfahren zur Herstellung insbesondere von Stahl-Langprodukten, sowie eine Einrichtung zur Durchführung des Verfahrens**

(71) Anmelder: SMS Concast AG, 8027 Zürich (CH)
(72) Erfinder: Die Erfindernennung liegt noch nicht vor
(74) Vertreter: Luchs, Willi

(57) **Zusammenfassung**

Bei einem Verfahren zur Herstellung insbesondere von Stahl-Langprodukten, wird mindestens ein erstarrter Strang (11) in Strangabschnitte (15, 15n) geschnitten, welche zwecks weitgehender Vermeidung von Zunderbildung in Abhängigkeit des Prozessverlaufes durch einen Halte-/Wärmeofen (20) geleitet werden. Dabei werden sie direkt über einen Rollengang (16) in den Halte-/Wärmeofen (20) und von diesem durch eine Induktionserwärmungseinheit (22) zur weiteren Aufwärmung auf die Walztemperatur zu den Walzrollen (24) des Walzwerks (23) geführt. Mit diesem Verfahren kann insbesondere eine Ausbringungs- und Qualitätssteigerung bzw. Produktionserhöhung erzielt werden.

## Beschreibung

Die Erfindung betrifft ein Verfahren zur Herstellung insbesondere von Stahl-Langprodukten nach dem Oberbegriff des Anspruches 1 bzw. eine Einrichtung zur Durchführung des Verfahrens.

Bei einem bekannten Verfahren und Vorrichtung gemäss der Druckschrift DE-A-10 2006 054 932 passiert das durch die Giessmaschine hergestellte Metallband mindestens einen Halteofen und mindestens einen Induktionsofen in Abhängigkeit der gewählten Betriebsart. Bei der einen Betriebsart einer kontinuierlichen Herstellung wird die erzeugte Dünnbramme in dem Halteofen auf eine gewünschte Temperatur gebracht und anschliessend unmittelbar vor dem Walzvorgang in der Walzstrasse mittels eines Induktionsofens auf die gewünschte Walztemperatur erwärmt. Der bevorzugt als Rollenherdofen vorgesehene Halteofen ist für die diskontinuierliche Betriebsart eingesetzt, bei der die Dünnbramme nach dem Schneiden in dem Halteofen verweilt, bis dieselbe durch den Induktionsofen und die erste Walzstrasse geführt wird.

Werden bei der Herstellung von Langprodukten die Strangabschnitte direkt in die Walzstrasse geführt, ist die Temperatur der Strangabschnitte normalerweise ausreichend, um sie direkt zu Walzen. Ein Halteofen zur Wiedererwärmung ist bei der direkten Zuführung nicht notwendig, eine etwaige erforderliche Temperaturerhöhung kann ausschliesslich mittels Induktionsofen erzielt werden.

Grundsätzlich entsteht insbesondere bei Stahl auf der Strangoberfläche eine Zunderschicht ungefähr bei Temperaturen von ca. 850°C bis 900°C, wobei diese Zunderbildung auch in Abhängigkeit der Verweilzeit entsteht. Je höher die Temperatur und je länger die Verweilzeit in diesem Temperaturbereich, desto höher die Zunderschicht-Bildungsrate. Bei Knüppeln liegt der Verlust aufgrund der Zunderbildung in aller Regel bei ungefähr 0.6 - 1.0 Volumenprozenten, indes bei Beam Blanks bei cirka 1.0 bis 2.0 Volumenprozenten. Die erhöhten Verluste durch Zunderbildung bei Beam Blanks stellt sich insbesondere aufgrund des hohen Verhältnisses zwischen Oberfläche und Volumen ein.

Die Aufgabe der vorliegenden Erfindung besteht demgegenüber darin, ein Verfahren zur Erzeugung von Langprodukten, wie Knüppel, Vorblöcke, Beam Blanks oder ähnliche zu schaffen, mittels dem insbesondere eine Ausbringungs- und Qualitätssteigerung bzw. Produktionserhöhung ohne bzw. bei nur geringen Mehrkosten bezüglich Energieaufwand oder Investitionen erzielt wird.

Erfindungsgemäss ist diese Aufgabe durch das Verfahren nach Anspruch 1 bzw. durch die Einrichtung nach Anspruch 7 gelöst.

Das Verfahren nach der Erfindung sieht vor, die Strangabschnitte zwecks weitgehender Vermeidung von Zunderbildung in Abhängigkeit des Prozessverlaufes in den mindestens einen als Halte-/Wärmeofen ausgebildeten Ofen zu leiten, wobei sie direkt über einen Rollengang, über ein Kühlbett oder durch eine die Strangabschnitte quer zur Verschieberichtung puffernde Einrichtung in den jeweiligen Halte-/Wärmeofen und von diesem durch die wenigstens eine Induktionserwärmungseinheit zur weiteren Aufwärmung auf die Walztemperatur zu den Walzrollen des Walzwerks geleitet werden.

Dieses erfindungsgemässe Verfahren ermöglicht, dass die gegossenen Stränge weitgehend von Zunder befreit sind und damit die Ausbringung im Walzwerk erhöht wird. Gleichzeitig bietet es die Möglichkeit, durch eine gezielte Temperaturführung die Gefüge-Eigenschaften des Fertigproduktes zu homogenisieren und zu verbessern.

Das oben erläuterte Verfahren basiert auf der Zielsetzung, die Verweilzeit bei hohen Temperaturen (T > ∼900°C) und dadurch die Zunderbildung von in einer Stranggiessanlage hergestellten Strangabschnitten vor dem anschliessenden Walzen in einem Walzwerk zu minimieren. Dies soll erfindungsgemäss unabhängig von der Verfahrensweise aufgrund unterschiedlicher Durchsätze einer Stranggiessanlage und eines nachfolgenden Walzwerks möglich sein.

Weitere vorteilhafte Einzelheiten dieses Verfahrens im Rahmen der Erfindung sind in den abhängigen Ansprüchen definiert.

Ausführungsbeispiele der Erfindung sowie weitere Vorteile derselben sind nachfolgend anhand einer Zeichnung näher erläutert. Es zeigt:
- Fig. 1: eine schematische Darstellung einer Einrichtung, welche nach dem erfindungsgemässen Verfahren produziert;
- Fig. 2: eine Variante einer schematischen Darstellung einer Stranggiessanlage mit einem erfindungsgemässen ersten Prozessverlauf;
- Fig. 3: die Stranggiessanlage nach Fig. 2 mit einem erfindungsgemässen zweiten Prozessverlauf;
- Fig. 4: die Stranggiessanlage nach Fig. 3 mit einem erfindungsgemässen dritten Prozessverlauf; und
- Fig. 5: die Stranggiessanlage nach Fig. 3 mit einem erfindungsgemässen vierten Prozessverlauf

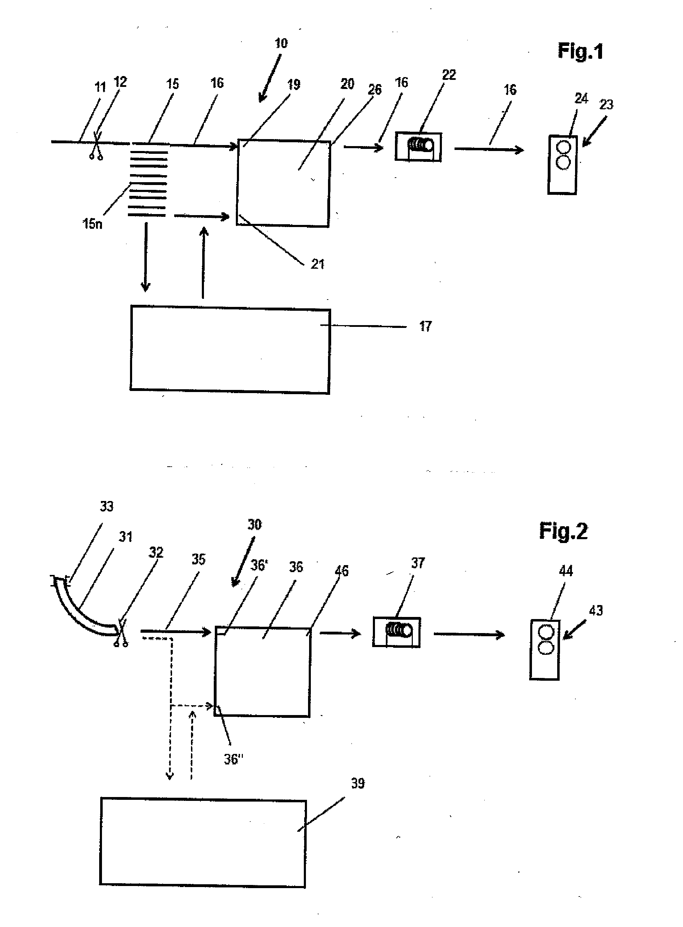

Bei einer Einrichtung 10 gemäss Fig. 1 werden beispielsweise mittels einer nicht näher gezeigten Stranggiessmaschine mindestens ein Strang 11 gegossen. Bei einer Ein- oder Mehrstrang-Giessanlage werden die Stränge üblicherweise von einem Bogen in eine horizontale Richtung umgeleitet, und dabei von einer angedeuteten Schneideinrichtung 12 zu Strangabschnitten 15 bis 15n mit einer bestimmten Länge zugeschnitten. Solche Schneideinrichtungen 12, die beispielsweise mittels Schneidbrennern arbeiten, sind bekannt und daher nicht näher erläutert.

Bei einer Einstrang- Giessanlage verbindet beispielsweise en Rollengang 16 die Giessanlage mit dem Walzwerk 23, indes bei einer Mehrstrang-Giessanlage die Strangabschnitte 15 bis 15n quer oder diagonal verschoben und zu einem die Giessanlage mit dem Walzwerk verbindenden gemeinsamen Rollengang 16 umgeleitet werden.

Wie eingangs erwähnt ist, ist die Einrichtung 10 dabei für die Herstellung insbesondere von Stahl-Langprodukten, wie Knüppel, Vorblöcke, Beam Blanks (Trägervorprofile)oder ähnlichen Strangformaten ausgelegt.

Nach dem erfindungsgemässen Verfahren werden die Strangabschnitte 15 bis 15n zwecks weitgehender Vermeidung von Zunderbildung in Abhängigkeit des Prozessverlaufes durch den mindestens einen als Halte-/Wärmeofen 20 ausgebildeten Ofen und von diesem durch einen Induktionserwärmungseinheit 22 zur weiteren Aufwärmung auf die Walztemperatur zu einem Walzgerüst 24 des Walzwerks 23 geleitet.

Die Strangabschnitte 15 bis 15n werden bei einem ersten Eingang 19 durch den Halte-/Wärmeofen 20 geleitet, wobei sie vorzugsweise-eine mittlere Temperatur von höher als 800°C aufweisen. Der Halte-/Wärmeofen 20 dient bei dem erfindungsgemässen Verfahren vorzugsweise zum Halten und nicht zum Erhöhen des genannten Temperaturniveaus der durchlaufenden Strangabschnitte 15 bis 15n in Temperaturbereichen unterhalb der Zunderbildungstemperatur.

Die nach dem Halte-/Wärmeofen 20 in der Induktionserwärmungseinheit 22 geführten Strangabschnitte 15 bis 15n werden dann mit hohem Temperaturgradient in kurzer Zeit auf die Walztemperatur weiter aufgewärmt, welche üblicherweise zwischen 950°C bis 1'250°C beträgt. Bei dieser vorgegebenen Walztemperatur gelangen sie dann ins Walzwerk 23.

Vorteilhaft werden diese Strangabschnitte 15 bis 15n in ihrer Längsachse vom Rollengang 16 geradlinig durch den Halte-/Wärmeofen 20 und die Induktionserwärmungseinheit 22 und weiter direkt zu einem ersten Walzgerüst 24 des Walzwerks 23 geleitet.

Aufgrund der kurzen Aufwärmzeit auf Walztemperatur und der kurzen Wegführung der Strangabschnitte wird die Zunderbildung nahezu gänzlich verhindert.

Mit diesem erfindungsgemässen Verfahren wird primär diese Zunderbildung bei den erzeugten Knüppeln, Vorblöcken, Beam Blanks oder ähnlichen Strangformaten bei allen erläuterten Verfahrensvarianten minimiert. Darüberhinaus wird aber erreicht, dass zum einen wenig Wärmeverlust der Strangabschnitte nach dem Giessen bis zum Walzwerk entsteht und zum andern können die Strangabschnitte je nach Verfahrensvariante durch den Halte-/Wärmeofen 20 mit einer solchen Temperatur versehen bzw. gehalten werden, bei denen keine oder nur eine geringe Zunderbildung entsteht.

Die anschliessende Induktionserwärmungseinheit 22 erhitzt diese durchlaufenden Strangabschnitte auf die Walztemperatur. Diese Erhitzung durch die Induktionserwärmungseinheit kann dynamisch mit variablen Heizleistungen und Frequenzen einstellbar sein, um die Strangabschnitte, die beim Eintritt in den Induktionserwärmungseinheit unterschiedliche Temperaturen über die Abschnittlänge aufweisen können, auf ein gleiches Temperaturniveau beim Auslauf aus der Induktionserwärmungseinheit einzustellen.

Vorteilhaft ist beim Halte-/Wärmeofen 20 ein zusätzlicher Eingang 21 vorgesehen, der dazu dient, dass Strangabschnitte, die nicht direkt nach dem Schneiden bspw. aus Kapazitätsgründen zum Walzwerk 23 geleitet werden können, vorerst zurückgehalten, dann zu diesem seitlichen Eingang 21 in den Halte-/Wärmeofen 20 gebracht, in diesem quer verschoben und dabei aufgewärmt bzw. auf der Eingangstemperatur gehalten und anschliessend aus dem Ausgang 26 zur Induktionserwärmungseinheit 22 geführt werden.

Ferner können die Strangabschnitte 15 bis 15n erforderlichenfalls in Abhängigkeit des Prozessverlaufes statt zum Halte-/Wärmeofen 20 zu einem Lagerplatz 17 überführt werden, bei dem sie beispielsweise auf Raumtemperatur abkühlen. Sie können dann beispielsweise wieder zu einem Eingang 21' beim Halte-/Wärmeofen 20, in diesem vorteilhaft wieder auf ein erhöhtes Temperaturniveau wie zum Beispiel gleich oder grösser als 800°C aufgewärmt und in der Folge beim Ausgang 26 durch diesen zur Induktionserwärmungseinheit geleitet und auf Walztemperatur erhitzt werden.

Zu diesem Zwecke sind im Halte-/Wärmeofen 20 gesteuerte Transportmittel vorgesehen, wie zum Beispiel Rollen, Gleitschienen und/oder Hubbalken, durch welche die Strangabschnitte direkt durchgeführt bzw. vom zweiten Eingang 21 oder vom dritten Eingang 21' gesteuert zum Ausgang 26 geleitet werden können.

Fig. 2 bis Fig. 5 veranschaulichen schematisch drei unterschiedliche Prozessverläufe bei einer Einrichtung 30, bei der auf herkömmliche Weise ein aus einer Kokille 33 austretender Strang 31 in eine horizontale Lage durch nicht näher gezeigte Rollen umgelenkt und durch eine Schneideinrichtung 32 in horizontal weglaufende Strangabschnitte 35 geschnitten wird.

Bei dieser Einrichtung 30 mit mindestens einem Giessstrang ist erfindungsgemäss ein als Halte-/Wärmeofen 36 ausgebildeter Ofen und nachfolgend eine Induktionserwärmungseinheit 37 vorgesehen, und es folgt das Walzwerk 43 mit einem ersten Walzgerüst 44. Der Halte-/Wärmeofen 36, die Induktionserwärmungseinheit 37 und das nachfolgende Walzgerüst 44 des Walzwerks 43 sind vorteilhaft hintereinander in geringem Abstand zueinander und dies in direkter Linie vom Rollengang zwischen der Stranggiessmaschine und dem Walzwerk 43 angeordnet, so dass eine weitgehende Vermeidung von Zunderbildung bei den Strangabschnitten 35 zusätzlich unterstützt wird.

Bei einem ersten Prozessverlauf gemäss Fig. 2 werden von der Stranggiessmaschine Strangabschnitte produziert, die vom Walzwerk 43 direkt aufgenommen und verarbeitet werden.

Bei einer Stranggiessanlage mit einem Strang 31 wird dieser in Strangabschnitte 35 geteilt und direkt durch den Halte-/Wärmeofen 36 oder ohne Schneiden kontinuierlich durch diesen Halte-/Wärmeofen und danach durch die Induktionserwärmungseinheit 37 und zum Walzgerüst 44 geführt, wie dies mit den fetten Pfeilen dargestellt ist. Diese Führung der Strangabschnitte 35 erfolgt vorteilhaft in einer Linie geradeaus ohne Querverschiebung derselben. Bei einer Stranggiessmaschine mit mehreren Strängen 31 werden diese in Strangabschnitte 35 geschnitten, auf einen gemeinsamen Rollengang quer oder diagonal umgelenkt und durch den Eingang 36' direkt durch den Halte-/Wärmeofen 36 und von diesem durch die Induktionserwärmungseinheit 37 und zum Walzgerüst geführt.

Während Stillstandzeiten des Walzwerks, wie z.B. unplanmässige Unterbrechungen , Format- oder Walzenwechsel, werden die Strangabschnitte 35 quer zur Verschieberichtung weggeführt und entweder zum zusätzlichen Eingang 36' in den Halte-/Wärmeofen 36 oder aber zu einem Lagerplatz 39 geleitet. Die Strangabschnitte 35, die über den Eingang 36" in den Halte-/Wärmeofen 36 geführt werden, können nach Wiederaufnahme der Produktion des Walzwerks oder während Stillstandzeiten der Stranggiessanlage im Walzwerk weiterverarbeitet werden.

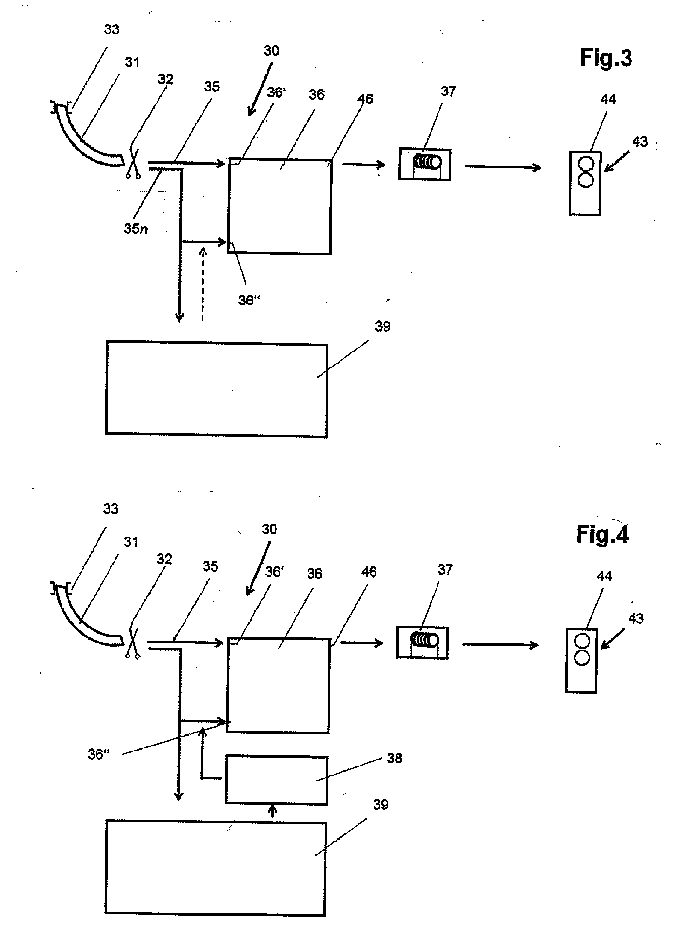

Bei einem zweiten Prozessverlauf gemäss Fig. 3 werden beispielsweise in einer Stranggiessanlage mehr Strangabschnitte produziert als vom Walzwerk aufgenommen wird. Zweckmässigerweise werden die Strangabschnitte 35 wiederum durch den Eingang 36' direkt in den Halte-/Wärmeofen 36 und von diesem durch die Induktionserwärmungseinheit 37 zum Walzgerüst 44 geführt. Zusätzlich werden aber auch je nach Bedarf überschüssige Strangabschnitte 35n quer zur Verschieberichtung weggeführt und entweder bei dem zusätzlichen Eingang 36' in den Halte-/Wärmeofen 36 oder aber zu einem Lagerplatz 39 geleitet. Dies wird prozesstechnisch so gesteuert, dass je nach Anzahl der überschüssigen Strangabschnitte 35n pro Zeiteinheit diese bei geringer überschüssiger Anzahl in den Halte-/Wärmeofen 36 beim zusätzlichen Eingang 36' oder bei grösserer Überschussmenge zumindest teils zum Lagerplatz 39 weitergeleitet werden.

Wird beispielsweise in der Giessmaschine weniger Stahl produziert als vom Walzwerk aufgenommen wird, können zusätzlich Strangabschnitte vom Lagerplatz 39 über den Eingang 36" in den Halte-/Wärmeofen 36 geführt werden, in diesem auf ein erhöhtes Temperaturniveau wie zum Beispiel gleich oder grösser als 800°C erwärmt und dies kombiniert mit Strangabschnitten, die direkt aus der Giessmaschine kommen, dem Walzwerk zugeführt werden.

Während Stillstandzeiten des Walzwerks, z.B. unplanmässige Unterbrechungen, Format oder Walzenwechsel, werden die Strangabschnitte 35 quer zur Verschieberichtung weggeführt und entweder beim zusätzlichen Eingang 36' in den Halte-/Wärmeofen 36 oder aber zu einem Lagerplatz 39 geleitet. Die Strangabschnitte 35, die über den Eingang 36" in den Halte-/Wärmeofen 36 befördert werden, können nach Wiederaufnahme der Produktion des Walzwerks oder während Stillstandzeiten der Giessanlage im Walzwerk weiterverarbeitet werden.

Ein dritter Prozessverlauf gemäss Fig. 4 kann zum Beispiel bei einem höheren Durchsatz des Walzwerkes als bei der Giessmaschine erfolgen.

Die Strangabschnitte 35 werden entsprechend direkt über den Eingang 36" durch den Halte-/Wärmeofen 36 und von diesem durch die Induktionserwärmungseinheit 37 und zwischen die Rollen 44 einer ersten Walzeinheit geführt, so dass bei diesen an der Aussenfläche praktisch kein Zunder entsteht.

Um eine ununterbrochene Speisung von Strangabschnitten zum Walzwerk zu gewährleisten oder den Durchsatz der Walzstrasse zu erhöhen, können gemäss Fig. 4 zusätzlich Strangabschnitte vom Lagerplatz 39 in annähernd kaltem Zustand via einen separaten Vorheizofen (Reheating-Furnace) 38 erwärmt und anschliessend über den Eingang 36" zum Halte-/Wärmeofen 36 bei seinem Eingang 36" zugeführt werden. Bei seinem Ausgang 46 werden dann die Strangabschnitte 35 zur Induktionserwärmungseinheit 37 so geleitet, dass die Strangabschnitte 35, 35n nacheinander mit nur geringem Abstand gespeist werden, d.h. sie können im Halte-/Wärmeofen 36 abwechslungsweise direkt durchgeführt bzw. vom zweiten Eingang 36" durch die Transportmittel zum Ausgang 46 befördert werden. Dieser zweite Eingang 36"könnte auf der Seite zum Lagerplatz hin beim Halte-/Wärmeofen 36 vorgesehen sein.

Als weitere Variante, die im Prinzip in Fig. 4 dargestellt ist, könnten auch Strangabschnitte 35n nur vom Lagerplatz 39 über den Vorheizofen 38 zum Halte-/Wärmeofen 36 und dann via die Induktionserwärmungseinheit 37 zum Walzwerk 43 geleitet werden. Dies würde insbesondere dann ausgeführt, wenn zum Beispiel bei der Giessmaschine ein Giessunterbruch vorliegen würde.

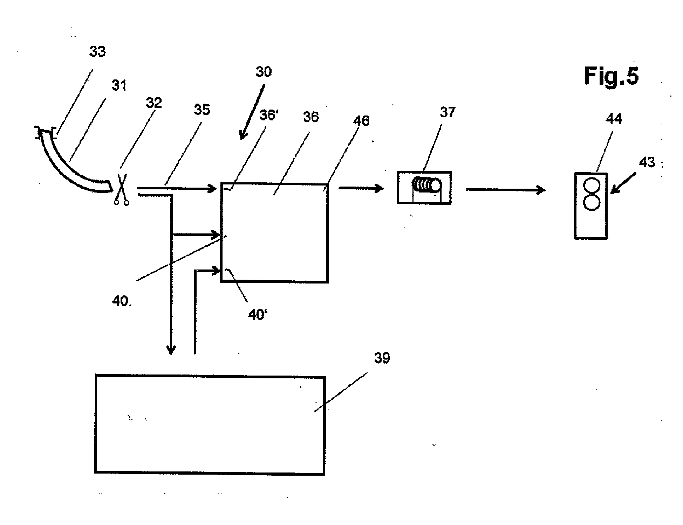

Gemäss Fig. 5 können die Strangabschnitte von der Giessanlage direkt über den Eingang 36' durch den Halte-/Wärmeofen 36 oder "im warmen" Zustand durch einen Eingang 40 in denselben geleitet werden. Zusätzlich können zur Erhöhung des Durchsatzes der Walzstrasse kalte Strangabschnitte vom Lagerplatz 39 über einen weiteren Eingang 40' in den Halte-/Wärmeofen geleitet werden, wobei die Temperaturführung im Halte-/Wärmeofen 36 so gewählt werden kann, dass die Strangabschnitte im Bereich des Eingangs 40 eine beispielhaft ähnliche Temperatur aufweisen, wie die Strangabschnitte, die von der Giessanlage im warmen Zustand über Eingang 36' dem Halte-/Wärmeofen zugeführt werden. Bei seinem Ausgang 46 werden dann die Strangabschnitte 35 zur Induktionserwärmungseinheit 37 so geleitet, dass die Strangabschnitte 35, 35n nacheinander mit nur geringem Abstand gespeist werden, d.h. sie können im Halte-/Wärmeofen 36 abwechslungsweise direkt durchgeführt bzw. vom ersten Eingang 40 oder vom zweiten Eingang 40' durch die Transportmittel zum Ausgang 46 befördert werden.

Es versteht sich von selbst, dass vorzugsweise nicht näher dargestellte Messeinrichtungen zum Messen der Temperaturen der durch den Halte-/Wärmeofen und die Induktionserwärmungseinheit geführten Strangabschnitte bzw. Längsteile vorgesehen sind, und dass mit diesen ermittelten Temperaturen die Heizleistungen des Aufheizofens, des Halte-/Wärmeofens bzw. der Induktionserwärmungseinheit gesteuert bzw. geregelt werden.

Im Rahmen der Erfindung kann die Induktionserwärmungseinheit mehrere hintereinander angeordnete Module umfassen. Damit liessen sich zum einen die durchlaufenden Strangabschnitte auf noch höhere Temperaturen aufwärmen und zudem könnten auftretende unterschiedliche Temperaturen eines Strangabschnitts beim Eintritt in diesen durch unterschiedliche Heizleistungen und Betriebsfrequenzen bei den Modulen über seine gesamte Länge bzw. den Querschnitt homogenisiert werden. Dies kann vorteilhaft auf der Basis von Messungen der Temperaturen des Strangabschnitts vor diesem Eintritt und durch eine entsprechende Steuerung der einzelnen Module der Induktionserwärmungseinheit vorgenommen werden.

Der Transport der Strangabschnitte 15, 15n, 35, 35n wird mittels eines Computerprogramms oder dergleichen derart gesteuert, dass bei diesen ein minimaler Wärmeverlust bzw. eine minimale Zunderbildung entsteht bzw. die Temperaturen zur Erzielung der gewünschten Gefüge- bzw. mechanischen Eigenschaften des Walzproduktes nach dem Walzprozess eingestellt werden.

Die Erfindung ist mit den obigen Ausführungsbeispielen ausreichend dargetan. Selbstverständlich könnten noch weitere Varianten erläutert sein. So könnten wie erwähnt auch zwei oder mehrere Aufwärmeöfen bzw. Induktionsöfen je nach Anforderung verwendet werden.

Es kann sich auch um eine Stranggiessanlage handeln, bei der gleichzeitig mehrere Stränge gegossen werden, bei der dann die geschnittenen Strangabschnitte gesteuert zu dem Rollengang oder zu dem Halte-/Wärmeofen umgeleitet würden.

## Patentansprüche

1. Verfahren zur Herstellung insbesondere von Stahl-Langprodukten, bei dem mindestens ein erstarrter Strang (11, 31) in Strangabschnitte (15, 15n, 35, 35n) geschnitten wird, welche zumindest durch einen Ofen und anschliessend durch wenigstens eine Induktionserwärmungseinheit (22, 37) auf eine definierte Walztemperatur aufgewärmt und direkt zu einem Walzgerüst (24, 44) eines Walzwerks (23, 43) befördert werden, **dadurch gekennzeichnet, dass**
die Strangabschnitte (15, 15n, 35, 35n) zwecks weitgehender Vermeidung von Zunderbildung in Abhängigkeit des Prozessverlaufes durch den mindestens einen als Halte-/Wärmeofen (20, 36) ausgebildeten Ofen geleitet werden, wobei sie direkt über einen Rollengang (16) oder dergleichen in den jeweiligen Halte-/Wärmeofen (20, 36) und von diesem durch die wenigstens eine Induktionserwärmungseinheit (22, 37) zur weiteren Aufwärmung auf die Walztemperatur zum Walzgerüst (24, 44) des Walzwerks (23, 43) geleitet werden.

2. Verfahren nach Anspruch 1, **dadurch gekennzeichnet, dass** die Strangabschnitte (15, 15n, 35, 35n) in dem Halte-/Wärmeofen (20, 36) auf einem Temperaturniveau von ca. 800 bis 900°C gehalten bzw. auf dieses erwärmt und nachfolgend in der Induktionserwärmungseinheit (22, 37) auf die Walztemperatur von 950 bis 1'250°C erwärmt werden.

3. Verfahren nach Anspruch 1 oder 2, **dadurch gekennzeichnet, dass** die Strangabschnitte (15, 15n, 35, 35n) zusätzlich durch wenigstens einen zweiten Eingang (21, 36', 36", 40, 40') beim Halte-/Wärmeofen (20, 36) geführt werden.

4. Verfahren nach Anspruch 1, 2 oder 3, **dadurch gekennzeichnet, dass** die hauptsächlichen Prozessverläufe wie folgt ablaufen:
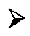 die Strangabschnitte (15, 15n, 35, 35n) werden direkt durch den Halte-/Wärmeofen (20, 36) und die Induktionserwärmungseinheit (22, 37) zum Walzwerk geführt, ohne dass diese umgelenkt werden;
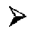 ein Teil der Strangabschnitte (15, 15n, 35, 35n) wird direkt durch den Halte-/Wärmeofen (20, 36) und die Induktionserwärmungseinheit (22, 37) zum Walzwerk befördert,
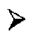 während ein Teil der Strangabschnitte (15, 15n, 35, 35n) zum Puffern umgelenkt und durch einen zweiten Eingang (21, 36", 40') in den Halte-/Wärmeofen (20, 36) und von diesem zur Induktionserwärmungseinheit (22, 37) geleitet wird;
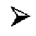 und/oder dass ein Teil der Strangabschnitte zu einem Lagerplatz (17, 39) und von diesem zum Halte-/Wärmeofen (36) und durch diesen zur Induktionserwärmungseinheit (22, 37) geleitet werden.

5. Verfahren nach einem der vorhergehenden Ansprüche 1 bis 4, **dadurch gekennzeichnet, dass** der Transport der Strangabschnitte (15, 15n, 35, 35n) derart gesteuert wird, dass bei diesen ein minimaler Wärmeverlust bzw. eine minimale Zunderbildung entsteht.

6. Verfahren nach einem der vorhergehenden Ansprüche 1 bis 5, **dadurch gekennzeichnet, dass** der Transport der Strangabschnitte (15, 15n, 35, 35n) derart gesteuert wird, dass die Temperaturen zur Erzielung der gewünschten Gefüge- bzw. mechanischen Eigenschaften des Walzproduktes nach dem Walzprozess eingestellt werden.

7. Einrichtung zur Durchführung des Verfahrens nach einem der vorhergehenden Ansprüche 1 bis 6, **dadurch gekennzeichnet, dass** mindestens ein als Halte-/Wärmeofen (20, 36) ausgebildeter Ofen und nachfolgend wenigstens eine Induktionserwärmungseinheit (22, 37) vorgesehen ist, wobei der mindestens eine Halte-/Wärmeofen, die wenigstens eine Induktionserwärmungseinheit und das nachfolgende Walzgerüst (24, 44) des Walzwerks (23, 43) hintereinander in geringem Abstand zueinander angeordnet sind, so dass eine weitgehende Vermeidung von Zunderbildung bei den von dem erzeugten Strang (11, 31) mit einer Schneidvorrichtung (12) geschnittenen Strangabschnitten (15, 15n, 35, 35n) erfolgt.

8. Einrichtung nach Anspruch 7, **dadurch gekennzeichnet, dass** der Halte-/Wärmeofen einen Wärmeofen und einen separaten Halteofen aufweist.

9. Einrichtung nach Anspruch 7 oder 8, **dadurch gekennzeichnet, dass** ein Lagerplatz (39), zu dem die Strangabschnitte (15, 15n, 35, 35n) abzweigbar sind, und ein Aufheizofen (38) vorgesehen sind, durch welchen die Strangabschnitte (15, 15n, 35, 35n) auf ein erhöhtes Temperaturniveau aufheizbar und durch Fördermittel entsprechend förderbar sind.

10. Einrichtung nach einem der vorhergehenden Ansprüche 7 bis 9, **dadurch gekennzeichnet, dass** Messeinrichtungen zum Messen der Temperaturen des Halte-/Wärmeofens (20, 36), der Induktionserwärmungseinheit (22, 37) und der geführten Strangabschnitte (15, 15n, 35, 35n) vorgesehen sind, und dass mit diesen ermittelten Temperaturen Heizleistungen des Aufwärmeofens und der Induktionserwärmungseinheit steuer- bzw. regelbar sind.

11. Einrichtung nach einem der vorhergehenden Ansprüchen 7 bis 10, **dadurch gekennzeichnet, dass** der eine Stranggiessmaschine (30) und das Walzwerk (43) verbindende Rollengang geradlinig durch diesen mindestens einen Halt-/Wärmeofen (20, 36) und durch die wenigstens eine Induktionserwärmungseinheit (22, 37) geleitet ist.

12. Halte-/Wärmeofen für eine Einrichtung nach einem der vorhergehenden Ansprüche 7 bis 11, **dadurch gekennzeichnet, dass** ein direkter Eingang (36') für die Strangabschnitte (15, 15n, 35, 35n) und ein zweiter Eingang (21, 36') , um Strangabschnitte warmzuhalten, und/oder für die Zufuhr von Strangabschnitten zum Erwärmen auf erhöhtes Temperaturniveau von einem Lagerplatz (39) vorgesehen sind.

13. Halte-/Wärmeofen für eine Einrichtung nach einem der vorhergehenden Ansprüche 7 bis 12, **dadurch gekennzeichnet, dass** ein direkter Durchgang für die zu Strangabschnitte (15, 15n, 35, 35n), ein zweiter Eingang (21, 36'), um Strangabschnitte warmzuhalten, und ein dritter Eingang (21', 36") für die Zufuhr von Strangabschnitten zum Erwärmen auf erhöhtes Temperaturniveau von einem Lagerplatz (39) vorgesehen sind.

14. Halte-/Wärmeofen nach Anspruch 10, **dadurch gekennzeichnet, dass** gesteuerte Transportmittel darin vorgesehen sind, durch welche Strangabschnitte (15, 15n, 35, 35n) direkt durchgeführt bzw. vom zweiten Eingang (21, 36', 40') und/oder von einem dritten Eingang (40") unabhängig voneinander gesteuert zum Ausgang (26, 46) geleitet werden können.
